# EUROPÄISCHE PATENTSCHRIFT

(11) **EP 1 865 220 B1**
(45) Veröffentlichungstag und Bekanntmachung des Hinweises auf die Patenterteilung: **19.03.2014**
(21) Anmeldenummer: 06011993.0
(22) Anmeldetag: 10.06.2006
(51) Int. Cl.: F16F 15/02, G05D 19/02

(54) **Aktives Schwingungsisolationssystem mit verbesserter Wirkung gegen seismische Schwingungen**
Active vibration isolating system with improved action against seismic vibrations
Système actif d'isolation de vibrations avec efficacité améliorée contre les vibrations sismiques

(43) Veröffentlichungstag der Anmeldung: 12.12.2007
(73) Patentinhaber: Integrated Dynamics Engineering GmbH, 65479 Raunheim (DE)
(72) Erfinder: Heiland, Peter, 65479 Raunheim (DE)
(74) Vertreter: Herden, Andreas F.

(56) Entgegenhaltungen:
- EP-A- 1 304 499
- WO-A-99/57452
- JP-A- 5 099 271
- JP-A- 5 263 868
- JP-A- 10 132 018
- US-A- 5 899 443

## Beschreibung

### Gebiet der Erfindung

Die Erfindung betrifft ein aktives Schwingungsisolationssystem sowie ein Verfahren zur Regelung eines aktiven Schwingungsisolationssystems. Insbesondere betrifft die Erfindung die Steuerung von Aktoren, welche an der zu isolierenden Last eines aktiven Schwingungsisolationssystems angreifen.

### Hintergrund der Erfindung

Schwingungsisolationssysteme sind bekannt und werden in vielen Bereichen der Technik, insbesondere der Halbleiterindustrie benötigt. So zeigt beispielsweise die europäische Patentschrift EP 927380 B1 ein Schwingungsisolationssystem, bei welchem ein Lithographiegerät auf Luftlagern schwingungsisoliert gelagert ist.

Um die Wirksamkeit derartiger Schwingungsisolationssysteme zu verbessern, gibt es Schwingungsisolationssysteme mit einer aktiven Regelung. Dabei wird über einen Sensor zumeist die Position der zu isolierenden Last erfasst und es werden bei Positionsänderungen Kompensationssignale über Aktoren, welche an der zu isolierenden Last angreifen, oder über die Steuerung des Drucks der Luftlager generiert und so die Isolationswirkung des Systems erheblich verbessert.

Es hat sich gezeigt, dass insbesondere seismische Schwingungen, also Schwingungen, welche über den Boden und die Basis des Schwingungsisolationssystems in das System eingekoppelt werden, nicht mit optimaler Wirkung isoliert werden können. So erfasst ein an der zu isolierenden Masse angeordneter Sensor die Schwingungen erst, wenn diese schon zu einer Positionsänderung der zu isolierenden Last geführt haben.

Auf der anderen Seite sind am Boden angeordnete Sensoren zur Steuerung des Schwingungsisolationssystems oft wenig geeignet, da die Zuordnung der am Boden aufgenommenen Raumrichtungen zu der Wirkrichtung an der isolierenden Masse angeordneter Aktoren oft nicht übereinstimmt. Insbesondere stimmt die Bewegungsrichtung des Bodens oft nicht mit der Richtung einer resultierenden Bewegung der zu isolierenden Last überein.

Das Dokument EP 1 304 499 A1 zeigt ein Schwingungsisolationssystem mit einem Beschleunigungssensor. Man geht hier davon aus, dass die Übertragungsfunktionen der Regelung unabhängig voneinander eingestellt werden können. Dies ist aber nicht möglich, da sich der auf dem Boden angeordnete Beschleunigungssensor mit dem Boden mitbewegt.

### Aufgabe der Erfindung

Der Erfindung liegt demgegenüber die Aufgabe zugrunde, ein Schwingungsisolationssystem beziehungsweise ein Verfahren zur Regelung eines Schwingungsisolationssystems bereitzustellen, bei welchem die zuvor genannten Nachteile des Standes der Technik verringert werden.

Insbesondere ist es Aufgabe der Erfindung, ein zuverlässiges Verfahren zur Regelung eines Schwingungsisolationssystems bereitzustellen, bei welchem eine aktive Kompensation von seismischen Schwingungen erfolgt, ohne dass es prinzipiell erst zu einer Positionsänderung der zu isolierenden Last kommen muss. Eine weitere Aufgabe der Erfindung ist es, ausgehend von seismischen Schwingungen Kompensationssignale zu generieren, welche neben dem Bewegungsvektor der Schwingung resultierende Bewegungen der zu isolierenden Masse auch in andere Richtungen berücksichtigen.

### Zusammenfassung der Erfindung

Die Aufgabe der Erfindung wird bereits durch ein aktives Schwingungsisolationssystem sowie durch ein Verfahren zur Regelung eines aktiven Schwingungsisolationssystems nach einem der unabhängigen Ansprüche erreicht.

Bevorzugte Ausführungsformen und Weiterbildungen der Erfindung sind den jeweiligen Unteransprüchen zu entnehmen.

Danach ist ein Schwingungsisolationssystem vorgesehen, welches zumindest einen Aktor, der an der zu isolierenden Last angreift, umfasst. Der Aktor greift vorzugsweise berührungslos an der zu isolierenden Masse an.

Insbesondere können Magnet-, elektrostatisch oder piezoelektrisch wirkende Aktoren verwendet werden. Im Sinne der Erfindung kann der Aktor auch Teil eines Lagers zur Schwingungsisolationssystem sein, beispielsweise eines Luftlagers.

Der oder die Aktoren sind mit zumindest einer Regeleinrichtung verbunden. Über die Regeleinrichtung werden Kompensationssignale generiert und es wird Schwingungen des Schwingungsisolationssystems aktiv entgegengewirkt.

Das erfindungsgemäße Schwingungsisolationssystem weist zumindest einen Sensor zur Erfassung von Schwingungen des Bodens beziehungsweise der Basis des Schwingungsisolationssystems auf, auf welchem das System angeordnet ist. Bei dem Sensor handelt es sich um einen Geschwindigkeitssensor, über dessen Signal eine Bewegung bestimmt werden kann.

Der Sensor erfasst Bewegungen in zumindest einem Freiheitsgrad, dabei kann es sich sowohl um translatorische als auch rotatorische Freiheitsgrade handeln.

Das Signal des Sensors wird an die Regeleinrichtung weitergeleitet. Die Regeleinrichtung weist Mittel auf, um anhand der Signale des Sensors Kompensationssignale in zumindest zwei Freiheitsgraden zu errechnen.

Gemäß der Erfindung wird also ermöglicht, dass ein Signal des Sensors, welches eine Bewegung des Bodens in eine Richtung repräsentiert, derart umgerechnet wird, dass es die Bestimmung einer Positionsänderung der zu isolierenden Last auch in zumindest einem weiteren Freiheitsgrad ermöglicht.

Da die resultierende Bewegung der zu isolierenden Last nicht immer mit der Bewegungsrichtung des Bodens beziehungsweise der Basis des Schwingungsisolationssystems übereinstimmt, wird so eine erheblich verbesserte Isolationswirkung erreicht.

Bei einer bevorzugten Ausführungsform der Erfindung weist die Regeleinrichtung Mittel auf, um Kompensationssignale in zumindest drei Freiheitsgraden, vorzugsweise sechs Freiheitsgraden zu errechnen.

So kann beispielsweise ein System bereitgestellt werden, bei welchem die Regeleinrichtung Kompensationssignale in allen drei Translationsfreiheitsgraden errechnet, das System also Kompensationssignale für alle drei Raumrichtungen generiert.

Bevorzugt werden auch die drei Rotationsfreiheitsgrade berücksichtigt, so dass die Regeleinrichtung Kompensationssignale in sechs Freiheitsgraden generiert.

Bei einer bevorzugten Ausführungsform der Erfindung sind in zumindest einem, vorzugsweise zwei und besonders bevorzugt drei Translationsfreiheitsgraden wirksame Sensoren und/oder Aktoren vorgesehen.

Bei einer weiteren bevorzugten Ausführungsform der Erfindung sind alternativ oder zusätzlich in zumindest einem, vorzugsweise zwei und besonders bevorzugt drei Rotationsfreiheitsgraden wirksame Sensoren und/oder Aktoren vorgesehen.

Bei einer Weiterbildung der Erfindung umfasst die Regeleinrichtung zumindest einen Speicher zur Hinterlegung einer Berechnungsvorschrift, insbesondere einer Transformationsmatrix.

Über eine Berechnungsvorschrift, welche insbesondere als Transformationsmatrix ausgestaltet ist, können die resultierenden Bewegungen der zu isolierenden Last auf eine Anregung durch seismische Schwingungen errechnet werden. Die aktive Regelung errechnet so ausgehend von den Sensorsignalen, welche die Bewegung des Bodens repräsentieren, Kompensationssignale. So wird verhindert, dass es überhaupt zu einer entsprechenden Bewegung der zu isolierenden Last kommt, beziehungsweise eine resultierende Bewegung der zu isolierenden Last wird zumindest verringert.

Bei einer Weiterbildung der Erfindung weist die Regeleinrichtung einen Speicher zur Speicherung von Kennlinien und/oder Kennfeldern auf, die die Reaktion der zu isolierenden Last auf Schwingungen repräsentieren.

Derartige Kennfelder können insbesondere die unterschiedliche Reaktion des Systems bei verschiedenen Randbedingungen, insbesondere bei veränderter zu isolierender Last darstellen. So passt sich das System automatisch geänderten Randbedingungen an.

Bei einer Weiterbildung der Erfindung ist auch vorgesehen, dass die Kennlinien beziehungsweise Kennfelder während des Betriebs aktualisiert werden. So kann die Berechnungsvorschrift sich automatisch ändernden Randbedingungen anpassen.

Bei einer weiteren bevorzugten Ausführungsform der Erfindung weist das Schwingungsisolationssystem zumindest einen weiteren Sensor zur Erfassungen von Schwingungen der zu isolierenden Last auf.

Über diesen weiteren Sensor wird die Position der zu isolierenden Last erfasst und über die Regeleinrichtung werden ebenfalls Kompensationssignale zur Schwingungsunterdrückung generiert. Diejenigen Kompensationssignale, welche den seismischen Schwingungen entgegenwirken sollen, werden dabei vorzugsweise zu den restlichen Kompensationssignalen hinzu addiert.

Die Erfindung betrifft des Weiteren ein Verfahren zur Regelung eines aktiven Schwingungsisolationssystems, bei welchem Schwingungen des Bodens beziehungsweise der Basis, auf welcher das Schwingungsisolationssystem angeordnet ist, in zumindest einem Freiheitsgrad erfasst werden, Kompensationssignale für die zu isolierende Last in zumindest einem weiteren Freiheitsgrad generiert werden und die Kompensationssignale an einen zumindest in dem weiteren Freiheitsgrad wirksamen Aktor weitergeleitet werden.

So wird erreicht, dass neben der Bewegungsrichtung und/oder der Rotationsrichtung der Schwingung die Auswirkung auf die zu isolierende Last in andere Richtungen berücksichtigt wird.

Vorzugsweise werden Schwingungen des Bodens beziehungsweise der Basis in drei Translationsfreiheitsgraden und/oder drei Rotationsfreiheitsgraden erfasst.

Ebenso werden bevorzugt Kompensationssignale in drei Translationsfreiheitsgraden und/oder Rotationsfreiheitsgraden errechnet.

Die Kompensationssignale werden vorzugsweise weiteren Kompensationssignalen einer aktiven Regelung hinzu addiert.

### Kurzbeschreibung der Zeichnungen

Die Erfindung soll im Folgenden anhand der Zeichnungen Fig. 1 bis Fig. 3 näher erläutert werden.
- Fig. 1: zeigt eine schematische Seitenansicht eines Ausführungsbeispieles eines Schwingungsisolationssystems,
- Fig. 2: zeigt schematisch die Draufsicht eines Schwingungsisolationssystems,
- Fig. 3: zeigt schematisch die Regelung eines Schwingungsisolationssystems, wobei die Regelung nur für einen Freiheitsgrad dargestellt ist.

### Detaillierte Beschreibung der Zeichnungen

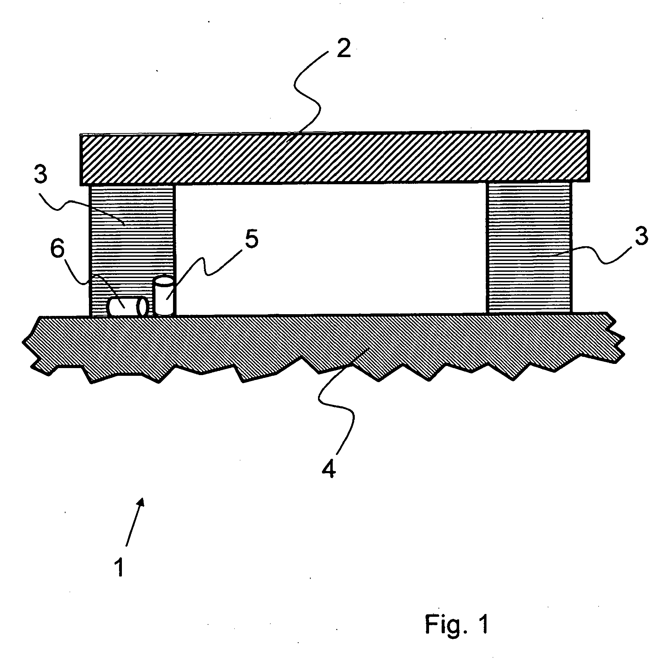

Bezug nehmend auf Fig. 1 sollen die wesentlichen Komponenten eines Schwingungsisolationssystems 1 näher erläutert werden. Das Schwingungsisolationssystem 1 umfasst eine zu isolierende Masse 2, hier als Tisch ausgestaltet, auf welchem weitere Baugruppen wie Maschinenelemente (nicht dargestellt) schwingungsisoliert gelagert werden können. Die zu isolierenden Masse 2 ist über Isolatoren 3 schwingungsisoliert auf dem Boden 4 gelagert. Bei den Isolatoren 3 handelt es sich in diesem Ausführungsbeispiel um Luftlager, welche ebenfalls in die aktive Regelung mit einbezogen sind (nicht dargestellt). Dazu weist eine Regeleinrichtung Mittel zur Steuerung der Luftzufuhr auf (nicht dargestellt).

Zur Erfassung von Schwingungen sind in diesem Ausführungsbeispiel in der Basis des Isolators 3 ein vertikal wirksamer Sensor 5 sowie ein horizontal wirksamer Sensor 6 angeordnet.

Über diese Sensoren 5, 6 werden Schwingungen des Bodens erfasst. Dazu sind die Sensoren 5, 6 in diesem Ausführungsbeispiel an dem Isolatorteil befestigt, welcher fest mit dem Boden verbunden ist (nicht im Detail dargestellt).

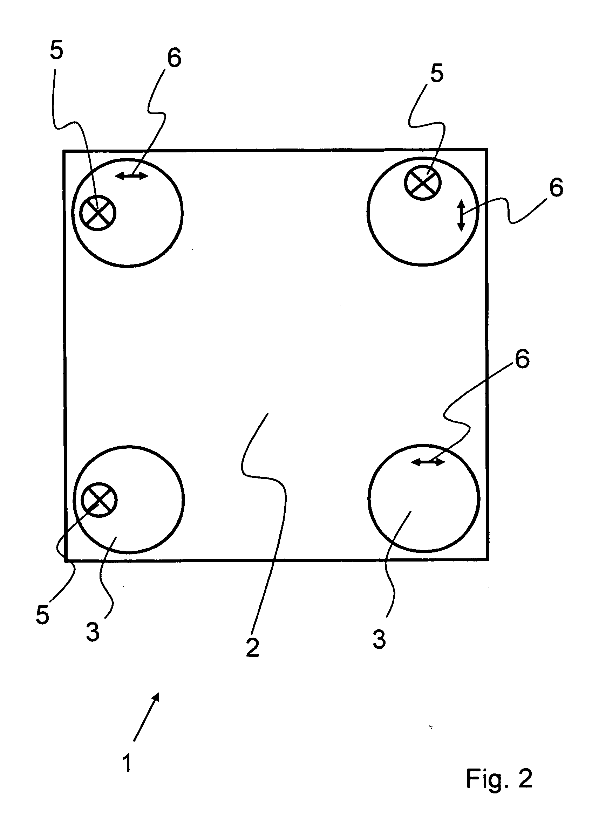

Fig. 2 zeigt schematisch eine Draufsicht eines derartigen Schwingungsisolationssystems 1. Die zu isolierende Last 2 ist auf insgesamt vier Isolatoren 3, hier ausgestaltet als Luftlager, gelagert. In der Basis der Isolatoren 3 sind horizontal wirksame Sensoren 6 zur Erfassung von Bewegungen in der Bodenebene angeordnet.

Über zusätzliche vertikale Sensoren 5 ist eine Erfassung von Schwingungen beziehungsweise Bewegungen des Bodens in alle drei Raumrichtungen möglich.

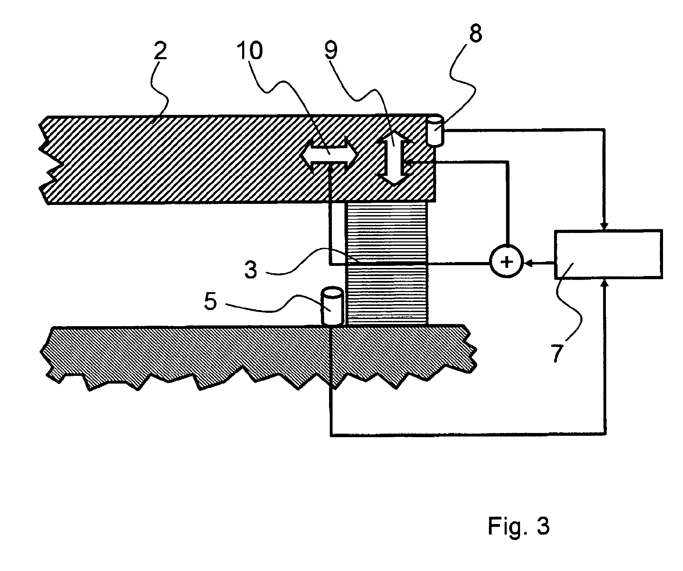

Bezug nehmend auf Fig. 3 soll die Regelung eines derartigen Schwingungsisolationssystems näher erläutert werden.

Hier wird die aktive Regelung für einen Freiheitsgrad dargestellt. Das Signal eines horizontal wirksamen Sensors 5, welcher eine Translationsbewegung in einer Raumrichtung erfasst, wird an eine Regeleinrichtung 7 weitergeleitet. Die Regeleinrichtung 7 ist zugleich mit einem weiteren Sensor 8, welcher Schwingungen der zu isolierenden Last 2 erfasst, verbunden.

Die Regeleinrichtung 7 errechnet aus dem Signal des horizontal wirksamen Sensors 5 Kompensationssignale, welche zu weiteren Kompensationssignalen aufgrund von Signalen des an der zu isolierenden Last angeordneten Sensors 8 hinzu addiert werden.

Dieses Kompensationssignal wird an die Aktoren 9, 10 weitergeleitet. Neben einem Aktor 9, der in vertikaler Richtung wirksam ist, ist ein weiterer Aktor 10 dargestellt, welcher in horizontaler Richtung wirksam ist.

Die Regeleinrichtung 7 greift bei der Berechnung von Kompensationssignalen auf eine Transformationsmatrix zurück, über die die Auswirkungen von Bewegungen des Bodens auch auf andere Freiheitsgrade berücksichtigt werden. So werden Kompensationssignale auch dem weiteren, in horizontaler Richtung wirksamen Aktor 10 hinzu addiert.

Die Darstellung gemäß Fig. 3 zeigt nur die Regelung mit einem Sensor 5 für einen Freiheitsgrad.

Vorzugsweise umfasst die Erfindung aber eine unabhängige Regelung aller sechs Freiheitsgrade. Dabei werden die Bewegungen des Bodens mittels einer Transformationsmatrix so verrechnet, dass die Auswirkung auf alle sechs Freiheitsgrade der zu isolierenden Masse berücksichtigt wird und so Kompensationssignale ebenfalls in allen sechs Freiheitsgraden generiert werden können, welche als zusätzliche Kompensationssignale zur aktiven Regelung hinzu addiert werden können. Die Sensorsignale werden von einem Digitalregler digitalisiert und mittels der Transformationsmatrix in die sechs Freiheitsgrade der zu isolierenden Masse umgerechnet.

So kann ein Schwingungsisolationssystem mit einer wesentlich verbesserten Wirkung gegen seismische Schwingungen bereitgestellt werden.

## Patentansprüche

1. Aktives Schwingungsisolationssystem (1), umfassend zumindest einen Aktor (9, 10), der an einer zu isolierenden Last (2) angreift und zumindest eine Regeleinrichtung, die mit dem zumindest einen Aktor (9, 10) verbunden ist,
**dadurch gekennzeichnet, dass**
zumindest ein als Geschwindigkeitssensor ausgebildeter Sensor (5, 6) zur Erfassung von Schwingungen des Bodens (4), auf dem das Schwingungsisolationssystem angeordnet ist, vorgesehen ist,
wobei der zumindest eine Sensor (5, 6) Bewegungen in zumindest einem Freiheitsgrad erfasst,
der zumindest eine Sensor mit der Regeleinrichtung verbunden ist, und
die Regeleinrichtung (7) Mittel aufweist, um ein Signal des Sensors, welches eine Bewegung des Bodens (4) in eine Richtung repräsentiert, derart umzurechnen, dass es die Bestimmung einer Positionsänderung der zu isolierenden Last (2) auch in zumindest einem weiteren Freiheitsgrad ermöglicht, um aus den Signalen des Sensors (5, 6) Kompensationssignale in zumindest zwei Freiheitsgraden zu errechnen, wobei das Schwingungsisolationssystem (1) zumindest einen weiteren Sensor (8) zur Erfassung von Schwingungen der zu isolierenden Last aufweist, und wobei die Kompensationssignale weiteren Kompensationssignalen einer aktiven Regelung aufgrund von Signalen des weiteren Sensors (8) hinzu addiert werden.

2. Aktives Schwingungsisolationssystem (1) nach dem vorstehenden Anspruch, **dadurch gekennzeichnet, dass** die Regeleinrichtung Mittel aufweist, um Kompensationssignale in zumindest 3 Freiheitsgraden, vorzugsweise 6 Freiheitsgraden zu errechnen.

3. Aktives Schwingungsisolationssystem (1) nach einem der vorstehenden Ansprüche, **dadurch gekennzeichnet, dass** in zumindest 1, vorzugsweise 2, besonders bevorzugt 3 Translationsfreiheitsgraden wirksame Sensoren (5, 6) und/oder Aktoren vorgesehen sind.

4. Aktives Schwingungsisolationssystem (1) nach einem der vorstehenden Ansprüche, **dadurch gekennzeichnet, dass** in zumindest 1, vorzugsweise 2, besonders bevorzugt 3 Rotationsfreiheitsgraden wirksame Sensoren (5, 6) und/oder Aktoren (9, 10) vorgesehen sind.

5. Aktives Schwingungsisolationssystem (1) nach einem der vorstehenden Ansprüche, **dadurch gekennzeichnet, dass** die Regeleinrichtung (7) zumindest einen Speicher zur Hinterlegung einer Berechnungsvorschrift, insbesondere einer Transformationsmatrix, aufweist.

6. Aktives Schwingungsisolationssystem (1) nach einem der vorstehenden Ansprüche, **dadurch gekennzeichnet, dass** die Regeleinrichtung (7) zumindest einen Speicher zur Speicherung von Kennlinien und/oder Kennfeldern, die eine Reaktion der zu isolierenden Last auf Anregungen repräsentieren, aufweist.

7. Verfahren zur Regelung eines aktiven Schwingungsisolationssystems (1), **dadurch gekennzeichnet, dass** Schwingungen des Bodens (4), auf dem das Schwingungsisolationssystem (1) angeordnet ist, in zumindest einem Freiheitsgrad mittels eines Geschwindigkeitssensors erfasst werden, Kompensationssignale für die zu isolierende Last (2) in zumindest einem weiteren Freiheitsgrad generiert werden, wobei Kompensationssignale für die zu isolierende Last (2) in zumindest zwei Freiheitsgraden errechnet werden, und an einen in zumindest dem weiteren Freiheitsgrad wirksamen Aktor (9, 10) weitergeleitet werden und wobei die Kompensationssignale weiteren Kompensationssignalen der aktiven Regelung aufgrund von Signalen eines weiteren Sensors (8), der Schwingungen der zu isolierenden Last (2) erfasst, hinzu addiert werden.

8. Verfahren zur Regelung eines aktiven Schwingungsisolationssystems (1) nach dem vorstehenden Anspruch, **dadurch gekennzeichnet, dass** Schwingungen des Bodens (4) in zumindest einem, vorzugsweise 2, besonders bevorzugt 3 Translationsfreiheitsgraden erfasst werden.

9. Verfahren zur Regelung eines aktiven Schwingungsisolationssystems (1) nach einem der vorstehenden Ansprüche, **dadurch gekennzeichnet, dass** Schwingungen des Bodens (4) in zumindest einem, vorzugsweise 2, besonders bevorzugt 3 Rotationsfreiheitsgraden erfasst werden.

10. Verfahren zur Regelung eines aktiven Schwingungsisolationssystems (1) nach einem der vorstehenden Ansprüche, **dadurch gekennzeichnet, dass** Kennlinien und/oder Kennfelder aufgezeichnet werden, die die Reaktion der zu isolierenden Last (2) auf eine Anregung repräsentieren.

11. Verfahren zur Regelung eines aktiven Schwingungsisolationssystems (1) nach dem vorstehenden Anspruch, **dadurch gekennzeichnet, dass** die Kompensationssignale unter Einbeziehung der Kennfelder und/oder Kennlinien errechnet werden.

## Claims

1. Active vibration isolation system (1), comprising
at least one actuator (9, 10) which acts on a load (2) to be isolated, and
at least one control device which is connected to the at least one actuator (9, 10), **characterised in that**
at least one sensor (5, 6), designed as a speed sensor, for detection of vibrations of the ground (4) on which the vibration isolation system is disposed is provided,
wherein the at least one sensor (5, 6) detects movements in at least one degree of freedom, the at least one sensor is connected to the control device, and
the control device (7) has means to recalculate a signal of the sensor, which represents a movement of the ground (4) in one direction, in such a way that it permits determination of a position change of the load (2) to be isolated also in at least one further degree of freedom in order to calculate compensation signals in at least two degrees of freedom from the signals of the sensor (5, 6), wherein the vibration isolation system (1) has at least one further sensor (8) for detection of vibrations of the load to be isolated, and wherein the compensation signals are added to further compensation signals of an active control on the basis of signals of the further sensor (8).

2. Active vibration isolation system (1) as claimed in the preceding claim, **characterised in that** the control device has means to calculate compensation signals in at least 3 degrees of freedom, preferably 6 degrees of freedom.

3. Active vibration isolation system (1) as claimed in any one of the preceding claims, **characterised in that** actuators and/or sensors (5, 6) effective in at least 1, preferably 2, particularly preferably 3 translation degrees of freedom are provided.

4. Active vibration isolation system (1) as claimed in any one of the preceding claims, **characterised in that** actuators (9, 10) and/or sensors (5, 6) effective in at least 1, preferably 2, particularly preferably 3 rotational degrees of freedom are provided.

5. Active vibration isolation system (1) as claimed in any one of the preceding claims, **characterised in that** the control device (7) has at least one memory for storing a calculation rule, in particular a transformation matrix.

6. Active vibration isolation system (1) as claimed in any one of the preceding claims, **characterised in that** the control device (7) has at least one memory for storing characteristics and/or families of characteristics which represent a reaction of the load to be isolated to stimuli.

7. Method for controlling an active vibration isolation system (1) **characterised in that** vibrations of the ground (4) on which the vibration isolation system (1) is disposed are detected in at least one degree of freedom by means of a speed sensor,
compensation signals for the load (2) to be isolated are generated in at least one further degree of freedom,
wherein compensation signals for the load (2) to be isolated are calculated in at least two degrees of freedom, and forwarded to an actuator (9, 10) effective in at least the further degree of freedom and wherein the compensation signals are added to further compensation signals for the active control on the basis of signals of a further sensor (8) which detects vibrations in the load (2) to be isolated.

8. Method for controlling an active vibration isolation system (1) as claimed in the preceding claim, **characterised in that** vibrations of the ground (4) are detected in at least one, preferably 2, particularly preferably 3 translation degrees of freedom.

9. Method for controlling an active vibration isolation system (1) as claimed in any one of the preceding claims, **characterised in that** vibrations of the ground (4) are detected in at least one, preferably 2, particularly preferably 3 rotational degrees of freedom.

10. Method for controlling an active vibration isolation system (1) as claimed in any one of the preceding claims, **characterised in that** characteristics and/or families of characteristics which represent the reaction of the load (2) to be isolated to a stimulus are recorded.

11. Method for controlling an active vibration isolation system (1) as claimed in the preceding claim, **characterised in that** the compensation signals are calculated with inclusion of the families of characteristics and/or characteristics.

## Revendications

1. Système actif d'isolation contre les vibrations (1), comprenant au moins un actionneur (9, 10) agissant sur une charge (2) à isoler, et
au moins un dispositif de régulation relié à l'au moins un actionneur (9, 10),
**caractérisé en ce que** :
il est prévu au moins un capteur (5, 6) réalisé comme capteur de vitesse pour la détection de vibrations du sol (4) sur lequel le système d'isolation contre les vibrations est disposé,
l'au moins un capteur (5, 6) détectant des mouvements dans au moins un degré de liberté,
l'au moins un capteur étant relié au dispositif de régulation, et
le dispositif de régulation (7) comportant des moyens pour convertir un signal du capteur qui représente un mouvement du sol (4) dans une direction, de telle manière que celui-ci permette aussi la détermination d'une variation de position de la charge (2) à isoler dans au moins un autre degré de liberté, pour calculer à partir des signaux du capteur (5, 6) des signaux de compensation dans au moins deux degrés de liberté, le système d'isolation contre les vibrations (1) comportant au moins un autre capteur (8) pour la détection de vibrations de la charge à isoler, et les signaux de compensation étant ajoutés à d'autres signaux de compensation d'une régulation active sur la base de signaux de l'autre capteur (8).

2. Système actif d'isolation contre les vibrations (1) selon la revendication précédente, **caractérisé en ce que** le dispositif de régulation comporte des moyens pour calculer des signaux de compensation dans au moins 3 degrés de liberté, préférentiellement 6 degrés de liberté.

3. Système actif d'isolation contre les vibrations (1) selon l'une des revendications précédentes, **caractérisé en ce que** des capteurs actifs (5, 6) et/ou des actionneurs sont prévus dans au moins 1, préférentiellement 2, et tout particulièrement 3 degrés de liberté de translation.

4. Système actif d'isolation contre les vibrations (1) selon l'une des revendications précédentes, **caractérisé en ce que** des capteurs actifs (5, 6) et/ou des actionneurs (9, 10) sont prévus dans au moins 1, préférentiellement 2, et tout particulièrement 3 degrés de liberté de rotation.

5. Système actif d'isolation contre les vibrations (1) selon l'une des revendications précédentes, **caractérisé en ce que** le dispositif de régulation (7) comporte au moins une mémoire pour l'archivage d'une instruction de calcul, en particulier d'une matrice de transformation.

6. Système actif d'isolation contre les vibrations (1) selon l'une des revendications précédentes, **caractérisé en ce que** le dispositif de régulation (7) comporte au moins une mémoire pour la mémorisation de courbes et/ou de diagrammes caractéristiques représentant une réaction de la charge à isoler à des excitations.

7. Procédé de régulation d'un système actif d'isolation contre les vibrations (1), **caractérisé en ce que** des vibrations du sol (4) sur lequel le système d'isolation contre les vibrations (1) est disposé, sont détectées dans au moins un degré de liberté au moyen d'un capteur de vitesse, des signaux de compensation pour la charge (2) à isoler sont générés dans au moins un autre degré de liberté, dans lequel des signaux de compensation pour la charge (2) à isoler sont calculés dans au moins deux degrés de liberté, et transmis à un actionneur (9, 10) actif dans au moins l'autre degré de liberté, et dans lequel les signaux de compensation sont ajoutés à d'autres signaux de compensation de la régulation active sur la base de signaux d'un autre capteur (8), lequel détecte les vibrations de la charge (2) à isoler.

8. Procédé de régulation d'un système actif d'isolation contre les vibrations (1) selon la revendication précédente, **caractérisé en ce que** des vibrations du sol (4) sont détectées dans au moins un, préférentiellement 2, et tout particulièrement 3 degrés de liberté de translation.

9. Procédé de régulation d'un système actif d'isolation contre les vibrations (1) selon l'une des revendications précédentes, **caractérisé en ce que** des vibrations du sol (4) sont détectées dans au moins un, préférentiellement 2, et tout particulièrement 3 degrés de liberté de rotation.

10. Procédé de régulation d'un système actif d'isolation contre les vibrations (1) selon l'une des revendications précédentes, **caractérisé en ce que** des courbes et/ou des diagrammes caractéristiques sont enregistrés, lesquels représentent la réaction de la charge (2) à isoler à une excitation.

11. Procédé de régulation d'un système actif d'isolation contre les vibrations (1) selon la revendication précédente, **caractérisé en ce que** les signaux de compensation sont calculés en intégrant les diagrammes et/ou les courbes caractéristiques.
